# EUROPEAN PATENT SPECIFICATION

(11) **EP 0 287 005 B1**
(45) Date of publication and mention of the grant of the patent: **10.03.1993**
(21) Application number: 88105695.6
(22) Date of filing: 11.04.1988
(51) Int. Cl.: G01N 35/00

(54) **A method for chemically analyzing a sample using a test piece**
Verfahren zur chemischen Analysierung unter Verwendung einer Testvorrichtung einer Probe
Procédé pour l'analyse chimique d'un échantillon, par utilisation d'un dispositif des test

(30) Priority: 11.04.1987 JP 55044/87
(43) Date of publication of application: 19.10.1988
(73) Proprietor: KABUSHIKI KAISHA KYOTO DAIICHI KAGAKU, Kyoto-shi Kyoto 601 (JP)
(72) Inventor: Takahata, Ichiro, Kyoto-shi Kyoto (JP)
(74) Representative: Patentanwälte Hauck, Graalfs, Wehnert, Döring, Siemons

(56) References cited:
- EP-A- 0 174 564
- EP-A- 0 183 524
- US-A- 3 942 952
- US-A- 4 298 571
- PATENT ABSTRACTS OF JAPAN vol. 11, no. 40 (P-544)(2487) 05 February 1987, & JP-A-61 209341 (KONISHIROKU PHOTO IND CO LTD) 17 September 1986,
- PATENT ABSTRACTS OF JAPAN vol. 7, no. 90 (P-191)(1235) 14 April 1983, & JP-A-58 015158 (FUJI SASHIN FILM K.K.) 28 January 1983,

## Description

The invention relates to a method for chemically analyzing a sample using a test piece according to the preamble of claim 1.

This invention relates to a biochemical analysis apparatus for analyzing and measuring chemically body fluid, particularly blood, by using a test piece with a reagent layer containing reagent, and particularly to the improvement of apparatus for applying a sample to each reagent layer of a multi-item test piece or plural single item test pieces set on a test piece table.

As methods for analyzing biochemically the presence, quantity, and change of special components in blood(plasma, serum, whole blood), there are a wet system using liquid reagent and a dry system using solid phase reagent. In the latter, a test piece with a reagent layer wherein filter paper or film was impregnated or applied by reagent is used. Since it is readily conducted in combination with a convenient apparatus using a reflectometer, it has been generally conducted as a bed-side test for inpatient or a real time test for outpatient.

Measurement technology has made a large progress along with the progress of reagent and analysis instrument, and by combination of the information of the single item measuement such as a glucose concentration and multi-components the diagnosis of various diseases or organs disorders and synthetic health examination have been generally made to help the treatment.

For example, by a set test of GOT, GPT, ALP, LAP, γ-GTP, and BUN in blood the diagnosis of liver disorders is conducted. To assess synthetically the health of patient in the first examination, blood sugar, creatinine, uric acid, BUN, cholesterol, TP, amylase, LDH, and GOT are analyzed as a profile test. Besides, there are several combination analysis for the diagnosis of renal function or diabetes.

To conduct these combination analysis in a short time, concurrent reaction and measurement of plural items are necessary. Also in the case of single item measurement of multi-samples, concurrent multi-measurement improves efficiency.

However, in the case of blood analysis, the applying quantiy is several-ten-odd µl, extremely small, and by standing after applying the higher concentration tends to appear as a measuring value because of evaporation of water in the sample. Particularly, since the reaction proceeds with keeping relatively higher temperature(ca 37°C), evaporation is accelerated. Further, by standing fluctuation in reaction temperature tends to occur.

To remedy the above problems, for example, it is known (Patent Abstract of Japan, Vol.11 No.40 (p-544)(2487) 5. Feb.1987) to provide a test piece within a constant temperature chamber on a disc which is rotated to position the test piece beneath a sample applying hole which is opened and closed by a shutter operated by a drive apparatus. Providing a plurality of holes would make the shutter operating means very complex.

### Summary of the Invention

The object of the invention is to solve the above problems, and is to assure accurate measurement with reproducible reaction by preventing evaporation of water from sample applied to reagent layer and by keeping constantly the reaction temperature at either a single item or multi-item test piece in measurement of multi-items or single item of multi-samples by simplifying the shutter driving and operating mechanism.

According to the invention, the object is solved by the features of claim 1. The sample applying station comprises a plurality of holes is arranged above a test piece table closely parallel to a measuring part to form a temperature keeping chamber, and each applying hole is fitted with a cover to close the applying hole after applying the sample to prevent water evaporation and temperature lowering. Further, opening or Shutting of the cover is operated by a cover opening and shutting rod moved together with a sample applying nozzle.

### Brief Description of the drawings

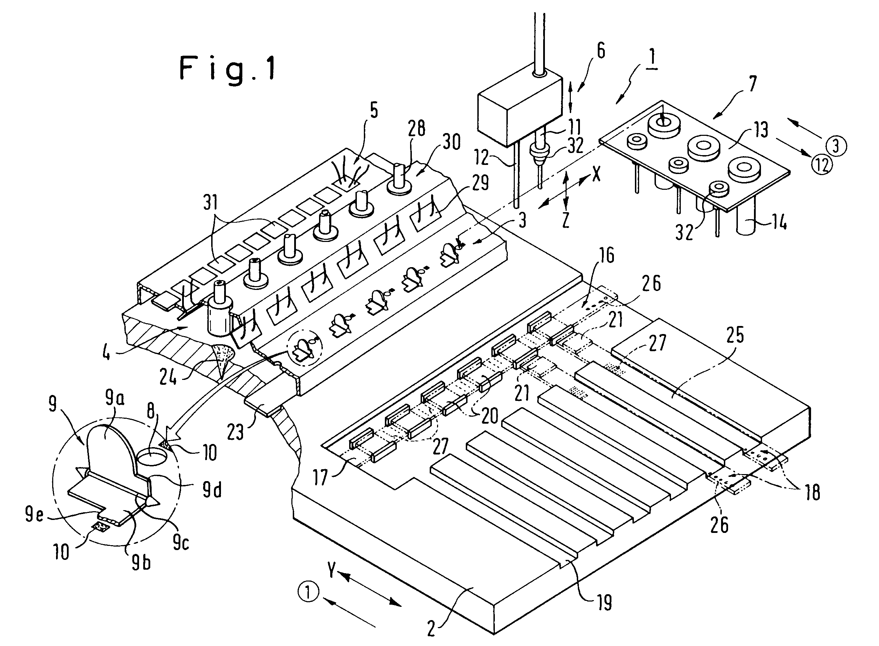

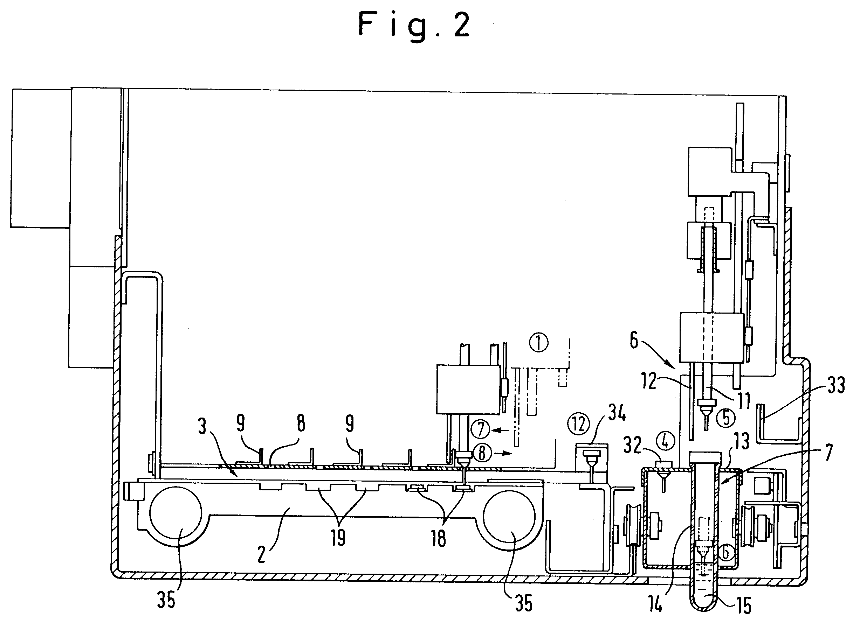

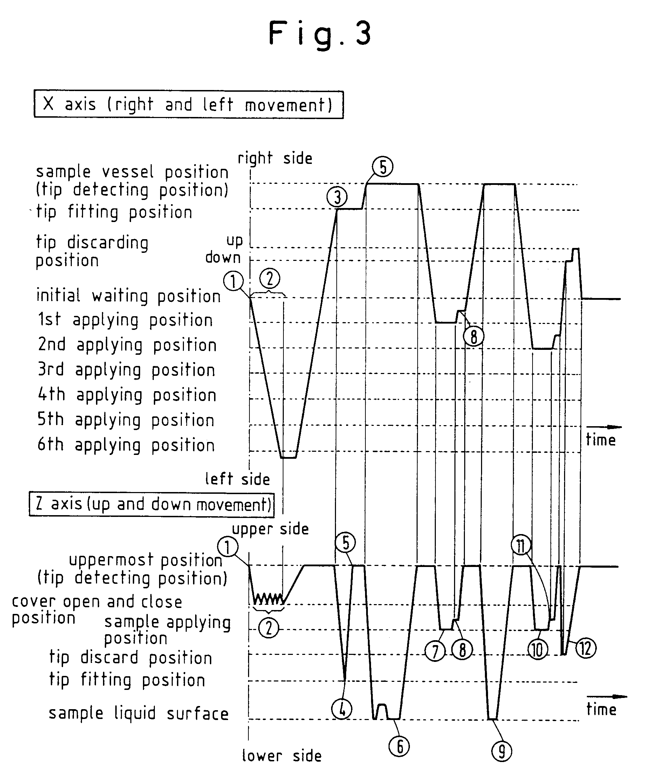

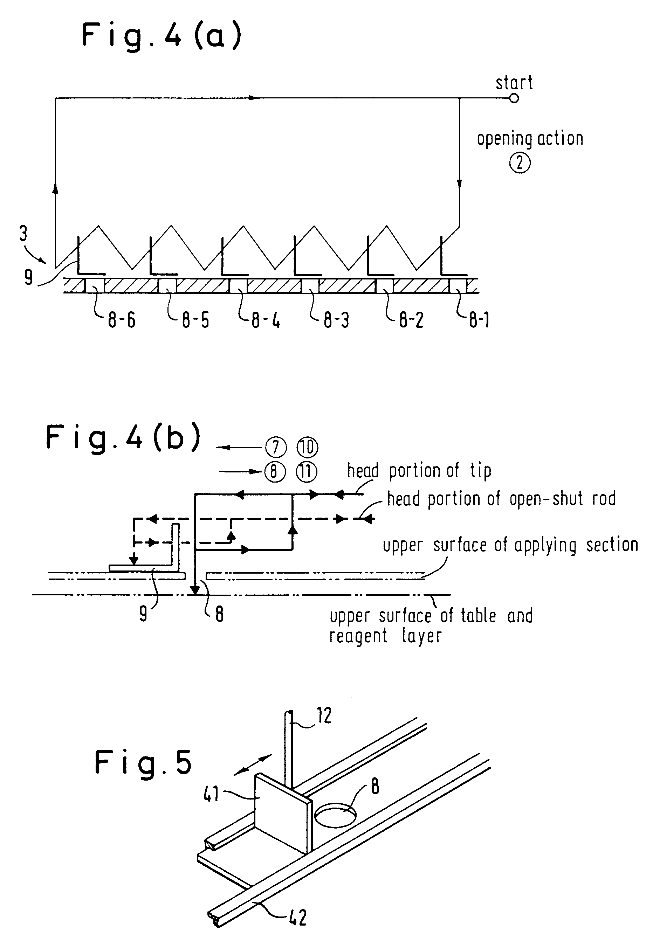

Fig. 1 is a rough oblique drawing showing an example of the main part of the biochemical analysis apparatus of the invention. Fig. 2 shows the front of the nozzle part, Fig.3 a graph showing movement of the nozzle part, Fig. 4(a) opening action of the cover due to the nozzle action, Fig. 4(b) a graph showing shutting action, and Fig. 5 is a oblique drawing showing the other example of the cover.

### Detailed Description of the Invention

The test piece table of this specification refers to the table for setting test pieces. It has an arbitrary form, and that having both of a multi-item test piece setting part and a single item test piece setting part is convenient, though that having only the other one may be usable.

The multi-item test piece setting part positioned parallel to the sample applying part is suitable, which is normally single though may be plural. The single item test piece setting part is plural, suitably positioned at a nearly right angle to the sample applying part. As a special example, the single item test piece setting part may be only one.

A sample refers to sample liquid, normally body fluid, particularly blood.

Applying refers to sticking a sample to a reagent layer, including dropping, contact sticking, and the like. In case a developing layer or the other layer exists over the reagent layer, applying to the reagent layer means from over the other layer.

Though the order of applying is arbitrary, it is preferable to apply from the reagent layer of the longer reaction time(one of the longer time till a measurement start) to shorten the measuring time. Though applying is conducted, of course, only to an applying hole wherein a reagent layer exists, opening or shutting of covers may be conducted to all applying holes.

A constant temperature room refers to a certain space having the inner part kept at a constant temperature, and a space nearly closed and kept at nearly constant temperature may be usable, since it is not a constant temperature room in a strict sense here. The volume of the constant temperature room is preferably small because of evaporation of sample water in the inner part.

An applying part refers to a plaece for applying a sample to a reagent layer in the analyzing apparatus.

An applying hole refers to an eyehole, through which a sample is applied to a reagent layer from over, set at the applying part. Its form, arrangement, and disposition are arbitrary, but normally a row sideways is convenient because of relation to the position of a reagent layer of a test piece. However, it is preferable to change the position of the applying hole correspondingly to the change of the setting arrangement of test pieces or the arranged position of the reagent layers on the test piece, for example circular or zigzag.

A cover refers to a thing for covering the applying hole to suppress evaporation of water in sample. The form of the cover is not specially restricted, but L-shaped or slide-shutter type is convenient.

In finishing covering by covers after applying, the test piece may be moved to the measuring part in any time till a measurement start after applying.

A measurement start time refers to a time till measurement is practicable after applying sample, depending upon the calibration line used for conversion to concentration.

A measuring part refers to a place for measuring reflectivity after finishing reaction( or after the lapse of measurement start time), normally comprising a luminous part and a light receiving part. Besides measurement of reflectivity, measurement of fluorescence obtained by radiation of exciting light and of voltage by contacting a terminal are considered.

The invention will be described in detail in the following based on an example showed in drawings.

Fig.1 shows roughly an example of biochemical analyzing apparatus comprising a sample liquid applying apparatus(1) of the invention, which comprises a lengthways long movable test piece table(2), a sample liquid applying part(3) fixed covering the test piece table(2) on the upper part of the table, a photometric part(4), a test piece judging part(5), a nozzle part(6), a sample holding part(7), an apparatus for driving them(omission in Fig.), and a microcomputer(omission in Fig.) for driving instructions and memories. The sample liquid applying apparatus(1) comprises a sample liquid applying part(3) and a nozzle part(6).

In the sample liquid applying part(3), applying holes(8···) are perforated every specified space, that is at the position of a reagent layer of a test piece described later, on a plate of small width, and a cover(9) is fitted on each applying hole. A cover(9), wherein a cover piece(9a) and a moving piece(9b) are joined into L-shape and a supporting axis(9c) is fitted to the joint part(the crossing part), turns on the supporting axis(9c) to close the applying hole(8) by the cover piece(9a). Both of the cover piece(9a) and moving piece(9b) are fitted with a notch(9d, 9e). A magnet(10) may be buried in at least one part around the applying hole(8) to prevent shaking of the cover(9). The nozzle part(6) comprises a nozzle for applying sample(hereafter nozzle)(11) and a cover opening and shutting rod(12), which are moved in the direction of left-right(X axis) and up-down(Z axis). The nozzle(11) is fitted with a pipette tip(32), which sucks sample(15) from a sample vessel(14) supported by a sample rack(13) with the tip. The sample holding part(7) comprises a sample rack(13) and the driving part(omission in Fig.).

The test piece table(2) is moved in the direction of for-back(Y axis) by the driving apparatus(omission in Fig.), on which one lateral groove(17) to set a multi-item test piece(16) and plural(6 in Fig.) longitudinal grooves(19···) to set single item test pieces(18) exist. The lateral groove(17) is prepared parallel to the photometric part(4) on the nearly center of the test piece table(2). The longitudinal groove(19) is prepared at a right angle to the lateral groove(17) on each position corresponding to the position of the reagent layer when setting a test piece(16) on the lateral groove(17). A heater is fitted at the part of the lateral groove(17) and the front of the longitudinal groove(19), that is the position of each reagent layer(20···, 21), to prepare a constant temperature zone(22). At the front of the lateral groove(17) a standard reflex piece(23) of white ceramic plate and plural (6 in the example) black damping cones(24) are fitted. These are for correction of reflectivity, as reflectivity 100% in the former and 0% the latter.

The test piece table(2) in the example is a special type able to measure both of a multi-item test piece(16) and a single item test piece(18).

In a multi-item test piece(16), plural(6 in Fig.) reagent layers(20···) retained reagents, which react with different substances necessary for the above-mentioned set test or profile test respectively, are fixed in order with a specified space from the end part of a strip(25) with the list of plural measuring substances names or notation(26) of a disease name measurable by the combination near the base of the strip and a bar-code(27···) (notation of only one data bit on one position in relation to the reading direction) as a means for judging the test piece. Accordingly, accurate and rapid measurement is possible with no mistake, of test pieces and saving labor for arranging many test pieces. In a set test, if the other item is necessary, it is supplemented by a single item test piece(18). The use of a multi-item test piece(16) with plural same pads(20) is convenient for measurement of a special item of multi-samples. Also a single item test piece is fitted with a bar-code(27) and a name notation(26).

On the form and movement of the test piece table(2), besides the example various changes are considered. For example, there are plural longitudinal grooves(19···) only, 2 or more of lateral grooves(17), and a disk type test piece table(2) constructed so that setting test pieces, judgment, measurement, and removal are operated in order by providing several groups of a group of a lateral groove(17) and plural longitudinal grooves(19···) selected depending on a required treatment capacity.

In the photometric part(4), plural(6 in Fig.) measurement devices(30), a combination of the luminous part(28) and the light receiving part(29), are sideways arranged with a specified space. The luminous part(28) radiates a light(multi-wavelength) from a light source(omission in Fig.) on each pad, in the example, the end of light fiber(light-guide) existing over the position of the reagent layer. The light recerving part(29) composed of a light detector receives a light reflected from the surface of the reagent layer. As measurement devices(30), an integrating sphere and the other devices may be also usable.

The test piece judging part(5) reads a bar-code(27) of each test piece, wherein plural(11 in Fig.) measurement devices(31···) composed of a photo-interruptor, a combination of a luminous diode and a photo-transistor, are sideways arranged. The measurement devices(31) are more than those(30) of the photometric part(4) because of the difference of the position of the bar-codes(20···, 21) between the multi-item test piece(16) and the single item test piece(18). A measurement device(31) may be composed of a light-guide and a light-detector.

In Fig.1, by shifting sideways each longitudinal groove(19) the number of the applying holes(8) at the sample liquid applying part(3) and of the measurement devices(30) at the photometric part(4) may be also 11. As a device for judging each test piece(16, 18), in place of the bar-code, a color notation, an eyehole, or a notch may be fitted using the corresponding detecting device. Further, each reagent layer may be observed by transmitted light or fluorescence in place of reflected light.

Procedure for analyzing blood sample(1 sample 2 items) by the invention apparatus will be described in the following according to drawings. The figure in o in each drawing shows the order of procedure.
① First, the sample vessel(14), pipette tip(32), and single item test piece(18) of required item number[6 or less in the example: 2 in Fig.1(state of Fig.1(A))] are set to the specified position respectively, and a start switch(omission in Fig.) is pushed.
   The test piece table(2) moves in front(back side), and the bar-code(27) of each test piece(18···) is read by the measuring device(31) at the test piece judging part(5). The measuring type(end-point method, rate method) of each test piece(18) and time till a measurement start after reaction are determined based on data memorized by a microcomputer(omission in Fig.) in advance. At the same time, the surface of each reagent layer is observed, and the wet layer may be cancelled as measured. During this time, the nozzle part(6) is in the ready position.
② Next, the nozzle part(6) turns to an opening action of the cover(9). The opening action is operated, as showed in Fig.4(a), by pushing down the moving piece(9b) of the cover(9) by the open-shut rod(12) by moving up and down sawlikely the nozzle part(6). Opening the cover is operated from the first applying hole(8-1) to the sixth applying hole(8-6) in order. This opening action may be operated only for the applying hole(8) set the test piece(18).
③ After opening all covers(9), the nozzle(11) is moved to the position wherein the tip is fitted. At the same time, the sample rack(13) is moved to the sampling position to prepare sampling of the sample(15).
④ Continuously, the nozzle part(6) goes down, and the pipette tip(32) is fitted to the nozzle(11).
⑤ After fitting the tip, the nozzle(11) rises, moves to left, and comes to over the sample vessel(14). Here, the fitting state of the pipette tip(32) is checked by an optical tip detector(33).
⑥ When the fitting state is correct, the nozzle part(6) goes down, and sucks the sample(15) into the pipette tip(32) for sampling after detecting the liquid level by the nozzle(11).
⑦ After sucking the sample(15), the nozzle part(6) rises, moves to right, and comes to over the first applying hole(8-1), continuously goes down, and applies the sample(15) to the reagent layer(21). At this time, the end of the cover open-shut rod(12) a little draws back by being pushed by the upper surface of the sample liquid applying part(3).
⑧ After applying, the nozzle part(6) somewhat rises, moves to right, and closes the cover by pushing the cover piece(9a) with the cover open-shut rod(12). (shutting action)
   Action of the nozzle part(6) in 7 and 8 is showed in Fig. 4(b). The solid line arrow shows action of the end of the tip(32), and the dotted line arrow action of the end of the cover open-shut rod(12).
   When the cover(9) is made of an iron plate and a weak magnet is arranged around the applying hole(8), shaking of the cover(9) is prevented and the opening and shutting state of the cover piece(9a) is stably maintained, though power is somewhat necessary in opening or shutting the cover(9).
⑨ Continuously, the second sampling is operated. In this case, detection of the liquid level may he abbreviated.
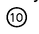 Similarly, the sample(15) is applied to the second test piece(18).
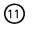 After applying, the shutting action is operated similarly with 8.
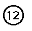 In finishing applying to the last (second in the example) test piece, the sample rack(13) returns to the set position of the sample vessel(14), and the nozzle(11) turns to the tip discarding action. The discarding action is operated by hanging the pipette tip(32) on the tip removing device(34) cut into U-shape and by elevating the nozzle part(6). Hereafter, the nozzle part(6) returns to the first ready position.
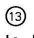 On the other hand, during from the tip fitting to the applying to the first test piece, the test piece table(2) moves so that the black damping cone(24) and the standard reflex piece are positioned under the photometric part(4), and after the photometry the correction of reflectivity is conducted. Hereafter, the table(2) stops at the position wherein the reagent layer of the test piece comes under each applying hole(8) of the sample liquid applying part(3).
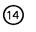 After finishing all applying processes, the test, piece table(2) is little advanced, after specified time reflectivity of each reagent layer is measured at the photometric part(9). Obtained data are memorized by the microcomputer, converted to concentration or the other mesurement value based on the calibration data memorized in advance, and output to the output apparatus(omission in Fig.). After finishing measurement, the test piece is removed, if necessary, again a test piece is set, and the above ① ∼ 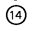 are repeated.

In Fig.2, the symbol 35, 35 are a guide rod 35, 35 for the test piece table(2). The table(2) is driven by a pulse motor(omission in Fig.) by controlled by the microcomputer. Similarly, the nozzle part(6) is driven by two pulse motors(omission in Fig.) separately. The nozzle(11) and the cover open-shut rod(12) may be separately driven.

An example, wherein as the cover a slide-shutter is used, will be described in the following. Fig.5 is the oblique drawing showing only near the cover(9) and the applying hole(8). A moving part(41) is prepared at a right angle to the hole, and moved by pushing with a cover open-shut rod. In the example, the cover(9) is moved along the edge part(42). In place of the edge part, a groove may be prepared. Further, the operating and shutting of the cover may be automatically operated by the use of spring.

The case of single item test piece(16) was described as mentioned above, and also the case of multi-item test piece(18) is similarly operated. In this case, plural items can be measured by setting only one test piece(16) (the state in Fig. 1(B)), being extremely convenient and accurate measurement.

As mentioned above in detail, in the operation, plural applying holes are sideways made with a specified space in a sample liquid applying part arranged at the upper part of a movable test piece table, and a cover, wherein a cover piece and movable piece are crossing in L-shape and a supporting axis is fitted in the crossing part, is fitted on each applying hole, and a cover open-shut rod, which opens or shuts the cover by pushing the cover piece and moving piece, is moved unifiedly with the nozzle for applying sample.

Accordingly, in the case of concurrent multi-measurement such as the set test or profile test of blood sample, water evaporation from sample after applying can be prevented, and keeping temperature is better, assuring accurate analysis. Further, the structure of apparatus is simple, and it is low in cost, because opening or shutting the cover is operated by making use of action of the sampling nozzle, being extremely useful.

## Claims

1. A method for chemically analyzing a sample applied to a test piece (16) including a plurality of reagent layers, placing the test piece (16) on a test piece table (2), moving the test piece table (2) to position the test piece (16) under a sample applying hole (8), applying from above a portion of said sample through a sample applying nozzle (11) to said test piece (16) through the hole (8), covering the hole with a movable hole cover (9) and moving the test piece table (2) to a measuring station (4) and measuring the sample on the test piece, characterized by providing a sample applying station (3) having a plurality of applying holes (8) arranged at specific intervals and covering each hole (8) with a respective one of said covers (9) in sequence after the sample portion is applied, and moving a rod (12) associated with said nozzle (11) for opening and closing each cover in sequence with application of said sample portions.

2. The method of claim 1, characterized by providing covers (9) each having a cover piece (9a) and a moving piece (9b) joined at a connection into an L-shape, a cover supporting shaft (9c) being fitted along said connection, said step of covering comprising moving said rod (12) for opening and closing to pivot said covers (9) about said shaft (9c) in sequence with application of said sample portions.

3. The method of claim 1, characterized by providing covers (9) each including a slide-shutter having a moving part (41) projecting upward and moving said rod (12) for opening and closing said covers operating by pushing the moving part in synchronism with the sample applying nozzle.

4. The method according to one of claims 1 to 3, wherein the applying holes (8) are arranged sideways.

5. The method of one of claims 1 to 4, wherein applying is being done in sequence beginning with the reagent layer requiring the longer time after applying before measurement is started.

6. An apparatus for performing the method according to one of claims 1 to 5, wherein the test piece table (2) includes a plurality of longitudinal grooves (19) for setting one of said test piece (16) each therein and guide means for moving the test piece table (2) beneath a casing defining a constant temperatur zone (20), said casing accomodating the sample applying station (3) and the measuring station (4).

## Patentansprüche

1. Verfahren zum chemischen Analysieren einer Probe, die auf einen Teststreifen (16) mit mehreren Reagenzschichten aufgebracht wird, bei dem der Teststreifen (16) auf einen Teststreifentisch (2) bewegt wird, um den Teststreifen (16) unter eine Öffnung (8) zum Aufbringen der Probe zu positionieren, die von oben über eine Düse (11) auf den Teststreifen (16) durch die Öffnung (8) aufgebracht wird, die Öffnung mit einem beweglichen Deckel (9) abgedeckt wird und der Teststreifentisch (2) in eine Meßstation (4) bewegt wird und die Probe auf dem Teststreifen (16) gemessen wird, dadurch gekennzeichnet, daß eine Probenaufbringstation (3) mit mehreren in spezifischen Abständen angeordneten Öffnungen (8) vorgesehen wird und jede Öffnung (8) mit je einem Deckel (9) in der Reihenfolge nach dem Aufbringen der Probe abgedeckt wird und eine zu der Düse (11) zugehörige Stange (9) zum Öffnen und Schließen jeden Deckels in der Reihenfolge zusammen mit dem Aufbringen der Proben bewegt wird.

2. Verfahren nach Anspruch 1,
dadurch gekennzeichnet, daß die Deckel (9) jeweils ein Deckelteil (9a) und ein bewegendes Teil (9b) haben, die miteinander L-förmig verbunden sind, und längs der Verbindung eine Deckelstützwelle (9c) angebracht ist, wobei zum Abdecken die Stange (12) zum Öffnen und Schließen bewegt wird, um die Deckel um die Welle (9c) in der Reihenfolge zusammen mit dem Aufbringen der Proben zu schwenken.

3. Verfahren nach Anspruch 1,
dadurch gekennzeichnet, daß die Deckel (9) jeweils mit einer Schieberblende versehen sind, die einen nach oben vorstehenden Teil (41) hat, und daß die Stange (12) zum Öffnen und Schließen der Deckel den beweglichen Teil synchron mit der Probenaufbringdüse verschiebt.

4. Verfahren nach einem der Ansprüche 1 bis 3, wobei die Öffnungen (8) Seite an Seite angeordnet sind.

5. Verfahren nach einem der Ansprüche 1 bis 4, wobei das Aufbringen in der Reihenfolge vorgenommen wird, daß mit der Reagenzschicht begonnen wird, welche die längere Zeit nach dem Aufbringen erfordert, bevor die Messung beginnt.

6. Vorrichtung zum Durchführen des Verfahrens nach einem der Ansprüche 1 bis 5, wobei der Teststreifentisch (2) mehrere Längsnuten (19) zum Einsetzen je eines Teststreifens (16) aufweist und Führungen vorgesehen sind, um den Teststreifentisch (2) unter ein eine konstante Temperaturzone (20) definierendes Gehäuse zu bewegen, wobei in dem Gehäuse die Probenaufbringstation (3) und die Meßstation (4) untergebracht sind.

## Revendications

1. Procédé pour l'analyse chimique d'un échantillon appliqué sur un organe d'essai (16) comprenant une pluralité de couches de réactifs, selon lequel on positionne l'organe d'essai (16) sur un plateau d'essai (2) pour amener l'organe (16) au-dessous d'un trou (8) d'application d'échantillon, on applique, par au-dessus, une partie de l'échantillon sur l'organe d'essai (16) au moyen d'une buse d'application (11) d'échantillon, à travers le trou (8), on recouvre le trou avec un couvercle de trou, mobile, (9), on déplace le plateau (2) jusqu'à un poste de mesure (4), et on mesure l'échantillon placé sur l'organe d'essai, caractérisé en ce qu'on prévoit un poste d'application d'échantillon (3) comportant une pluralité de trous d'application (8) disposés à des intervalles spécifiques, on recouvre chaque trou (8) avec l'un desdits couvercles (9) successivement après l'application de l'échantillon, et on déplace une tige (12) associée à ladite buse (11) afin de mettre chaque couvercle en position d'ouverture et de fermeture en séquence avec l'application desdits échantillons.

2. Procédé suivant la revendication 1, caractérisé en ce que chaque couvercle (9) comprend une partie de fermeture (9a) et une partie d'entraînement (9b) réunies par une liaison en forme de L, un axe (9c) de soutien du couvercle étant ajusté le long de ladite liaison, et en ce que, dans la phase de recouvrement, on déplace la tige (12) d'ouverture et de fermeture pour faire pivoter les couvercles (9) autour de l'axe (9c), séquentiellement avec l'application desdits échantillons.

3. Procédé suivant la revendication 1, caractérisé en ce que chaque couvercle (9) comprend un volet coulissant ayant une partie d'entraînement (41) en saillie vers le haut, et en ce que le déplacement de la tige (12) pour déplacer les couvercles en position d'ouverture et de fermeture agit en poussant ladite partie d'entraînement en synchronisme avec la buse d'application d'échantillon.

4. Procédé suivant l'une des revendications 1 à 3, dans lequel les trous d'application (8) sont disposés latéralement.

5. Procédé suivant l'une des revendications 1 à 4, dans lequel l'application des échantillons est effectuée séquentiellement, en commençant avec la couche de réactif qui nécessite le temps le plus long après l'application, avant de commencer la mesure.

6. Appareil pour la mise en oeuvre du procédé tel que défini suivant l'une des revendications 1 à 5, dans lequel le plateau d'essai (2) comprend une pluralité de gorges longitudinales (19) pour recevoir chacun des organes d'essai (16), et des moyens de guidage pour déplacer le plateau (2) au-dessous d'un boîtier délimitant une zone à température constante (20), ce boîtier logeant le poste d'application d'échantillon (3) et le poste de mesure (4).
